# EUROPEAN PATENT APPLICATION

(11) **EP 1 814 296 A1**
(43) Date of publication of application: **01.08.2007**
(21) Application number: 04822403.4
(22) Date of filing: 15.11.2004
(51) Int. Cl.: H04M 11/00, H04M 1/57, H04M 3/42

(54) **SUBJECT PRESENTING METHOD, SUBJECT INFORMATION STORAGE, AND TERMINAL**

(71) Applicant: Fujitsu Ltd., Kawasaki-shi, Kanagawa 211-8588 (JP)
(72) Inventor: KAGAWA, Masahiko, Hiroshima-shi, Hiroshima 731-3362 (JP); SUJIHARA, Hitoshi, Fujitsu Limited, Kawasaki-shi, Kanagawa 211-8588 (JP)
(74) Representative: Stebbing, Timothy Charles
(86) International application number: PCT/JP2004/016931
(87) International publication number: WO 2006/051611

(57) **Abstract**

A subject indicating method includes the steps of registering subject information in a subject information storing device connected to a network, the subject information being input from a calling terminal at the time of calling; notifying a called terminal of the subject information read from the subject information storing device at the time of call receiving by the called terminal; and indicating the subject information to the called terminal at the time of call receiving by the called terminal.

## Description

### CROSS-REFERENCE TO RELATED APPLICATION

This application is a U.S. continuation application filed under 35 USC 111(a) claiming benefit under 35 USC 120 and 365(c) of PCT application JP04/016931, filed November 15, 2004. The foregoing applications are hereby incorporated herein by reference.

### BACKGROUND OF THE INVENTION

### 1. Field of the Invention

The present invention generally relates to subject indicating methods and subject information storing devices and terminals. More particularly, the present invention relates to a subject indicating method whereby a subject is indicated to a call receiving terminal, and a subject information storing device and a terminal whereby the subject is registered or output.

### 2. Description of the Related Art

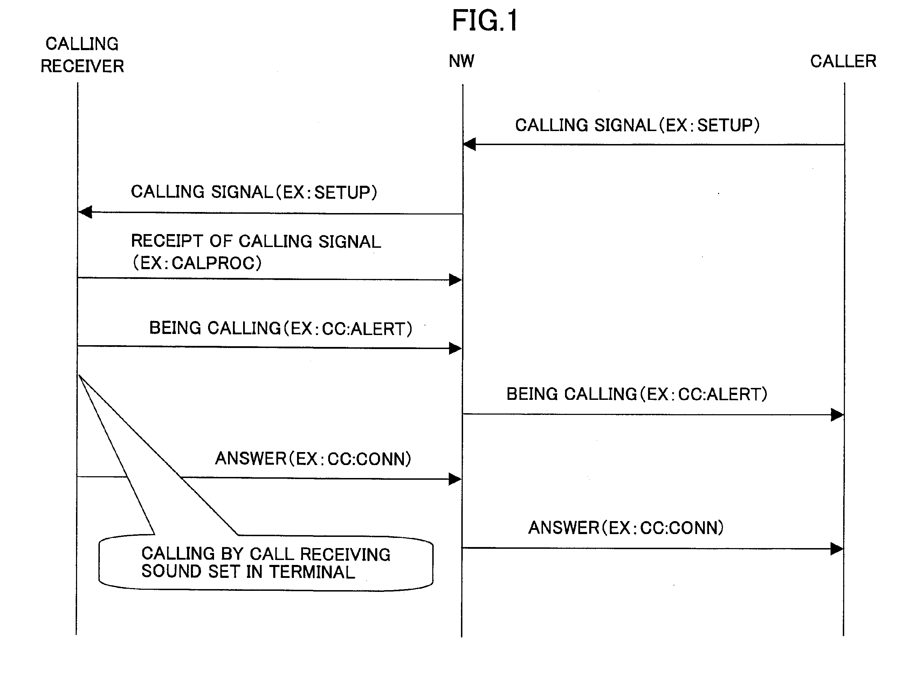

In a conventional practice, when a caller makes a phone call to a calling receiver, the calling receiver receives the incoming call in a call receiving sound set in a terminal owned by the calling receiver. A normal sequence at the time of transmitting or receiving the call is shown in FIG. 1.

As shown in FIG. 1, a calling signal such as "SETUP" is transmitted from a terminal of a caller to a network and the network notifies a call receiving terminal of this calling signal such as "SETUP". The call receiving terminal notifies the network of receipt of the calling signal such as CALPROC and what calling is being made such as "CC:ALERT".

After that, the call receiving terminal calls in a call receiving sound. In a case of being off-hook, the call receiving terminal notifies the network of an answer such as "CC:CONN" and the network notifies a terminal of the caller of the answer such as "CC:CONN".

In the above-mentioned related art, identification information of a receiving call of only the caller can be recognized by the calling receiver. Therefore, while identification of the caller can be determined, calling from the same caller cannot be identified. Therefore, for example, the intent of calling by the caller cannot be known until an answer to the caller is made.

In the meantime, Japanese Laid-Open Patent Application Publication No. 2001-136238 describes a telephone system which automatically answers an incoming call from a specified caller and performs calling with the voice of a caller instead of a ring-back tone. This receiving telephone system to which a 2nd address is allocated automatically answers a call setting transmitted from a calling telephone system to which a 1st address is allocated. The addresses are preliminarily registered in a recording medium provided in the receiving telephone system. When the calling telephone system transmits call setting for the 2nd address to a telephone line network and the call setting for the 2nd address is received by the receiving telephone system from the telephone line network, the receiving telephone system identifies the address received together with the call setting and collates the address with a telephone number registered in the recording medium. When a coinciding address exists, the receiving telephone system automatically answers the call setting, connects only a path for reception and outputs the voice transmitted from the calling telephone system instead of the ring-back tone.

However, in the technique discussed in the above-mentioned Japanese Laid-Open Patent Application Publication No. 2001-136238, since the receiving telephone system automatically answers, a communication state is made for a while so that a two-way communication state exists. Because of this, it may not be possible to recognize a subject of the incoming call before answering is made so that the two-way communication state is made.

### SUMMARY OF THE INVENTION

Accordingly, embodiments of the present invention can provide a novel and useful subject indicating method and subject information storing device and terminal, in which one or more of the problems described above are eliminated.

More specifically, the embodiments of the present invention can provide a subject indicating method and subject information storing device and terminal whereby a subject of call receiving or the like can be known before answering the call by the call receiving terminal, namely during the time calling is made.

The embodiments of the present invention can also provide a subject indicating method, including the steps of: registering subject information in a subject information storing device connected to a network, the subject information being input from a calling terminal at the time of calling; notifying a called terminal of the subject information read from the subject information storing device at the time of call receiving by the called terminal; and indicating the subject information to the called terminal at the time of call receiving by the called terminal.

The embodiments of the present invention can also provide a subject information storing device connected to a network, including a data base configured to store subject information being input from a calling terminal; a subject information managing part configured to manage the subject information stored in the database for every subject; a subscriber subject information managing part configured to manage the subject information stored in the database for every subscriber; and a session control part configured to manage communication with a network structural element.

The embodiments of the present invention can also provide a terminal including a radio transceiver part configured to obtain subject information being input from an input part of a calling terminal via a radio base station at the time of or after receiving and before response; and a control part configured to output the subject information from an output part after receiving and within a certain time after the response.

The embodiments of the present invention can also provide a terminal including a registration part configured to register subject information in a called terminal when connecting to a subject information storing device at the time of calling or after calling, the subject information being output from an output part of the called terminal at the time of call receiving or after a certain time passes after the call receiving.

According to the embodiment of the present invention, it is possible to provide a subject indicating method and subject information storing device and terminal whereby a subject of call receiving or the like can be known before answering the call by the call receiving terminal, namely during the time calling is made.

Other objects, features, and advantages of the present invention will become more apparent from the following detailed description when read in conjunction with the accompanying drawings.

### BRIEF DESCRIPTION OF THE DRAWINGS

FIG. 1 is a sequential diagram of transmitting or receiving call in a related art case;
FIG. 2 is a structural view of an example of a mobile communication system where an embodiment of the present invention is applied;
FIG. 3 is a functional structural view of an example of a subject information storage device of the embodiment of the present invention;
FIG. 4 is a view showing link information of a subscriber number and a subject number;
FIG. 5 is a flowchart showing an operations sequence of the subject information storage device at the time when subject information is stored;
FIG. 6 is a flowchart showing an operations sequence of the subject information storage device at the time when subject information is taken out;
FIG. 7 is a flowchart showing an operations sequence of the subject information storage device at the time when the subject is deleted by a communication completion trigger;
FIG. 8 is a flowchart showing an operations sequence of the subject information storage device at the time when the subject is deleted due to expiring of the effective time;
FIG. 9 is a functional structural view of an example of a terminal of the embodiment of the present invention;
FIG. 10 is a flowchart of an operations sequence of an entire system at the time of the subject information storing time (continuous calling);
FIG. 11 is a view showing a format of an example of a calling signal of the embodiment of the present invention;
FIG. 12 is a flowchart of a calling sequence of a mobile terminal;
FIG. 13 is a flowchart of an operations sequence of an entire system at the time of the subject information storing (only registration);
FIG. 14 is a flowchart of an operations sequence of an entire system at the time of subject information obtaining (immediate notification);
FIG. 15 is a flowchart of an operations sequence of an entire system at the time of subject information obtaining (notification after a certain time passes);
FIG. 16 is a flowchart of an operations sequence of an entire system at the redialing time; and
FIG. 17 is a flowchart of sequence of an example where the subject information is registered by voice or sound at the time of calling and the subject information is indicated by a ringing sound.

### DETAILED DESCRIPTION OF THE PREFERRED EMBODIMENT

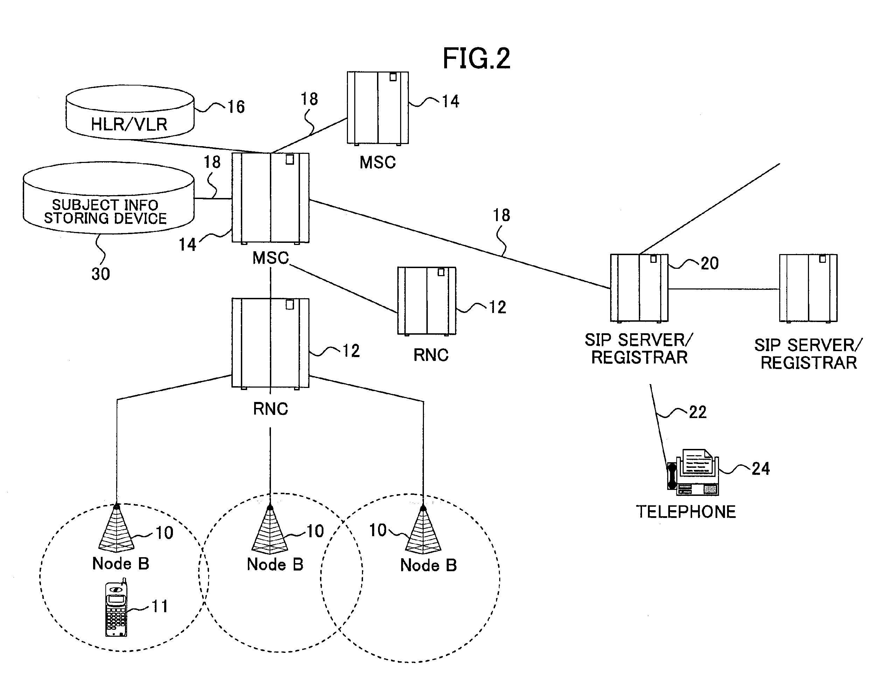

A description will now be given, with reference to FIG. 2 through FIG. 15, of embodiments of the present invention.

### <First embodiment>

### <Structure of mobile communication system>

FIG. 2 is a structural view of an example of a mobile communication system where an embodiment of the present invention is applied. In FIG. 2, a radio base station 10 forming a radio access network is a NodeB in IMT-2000 and a BTS in a PDC system. The radio base stations 10 are connected to a base station control part 12. Each of the radio base stations 10 is radio-connected to a mobile terminal 11. The base station control part 12 is an RNC in the IMT-2000 and a BCE in the PDC system. The base station control part 12 is connected to an exchanging part 14.

The exchanging part 14 forming a core network is an MSC or GMSC in the IMT-2000 or the PDC system. An HLR (Home Location Register)/ VLR (Visitor Location Register) 16 is connected to the exchanging part 14. In addition, via a network 18, another exchanging part 14 and an SIP server (or register) 20 are connected to the exchanging part 14. An IP telephone 24 is connected to an SIP server 20 via an IP telephone network 22.

The mobile communication system of the embodiment of the present invention may be provided in other networks such as an IP phone network or a mobile network of a subject information storing device 30.

Next, a structure of subject information storing information and a storing function are discussed and then operations at subject information storing time, subject information taking out time, and subject information deleting time are discussed.

### <Structure of subject information storing device and storing function>

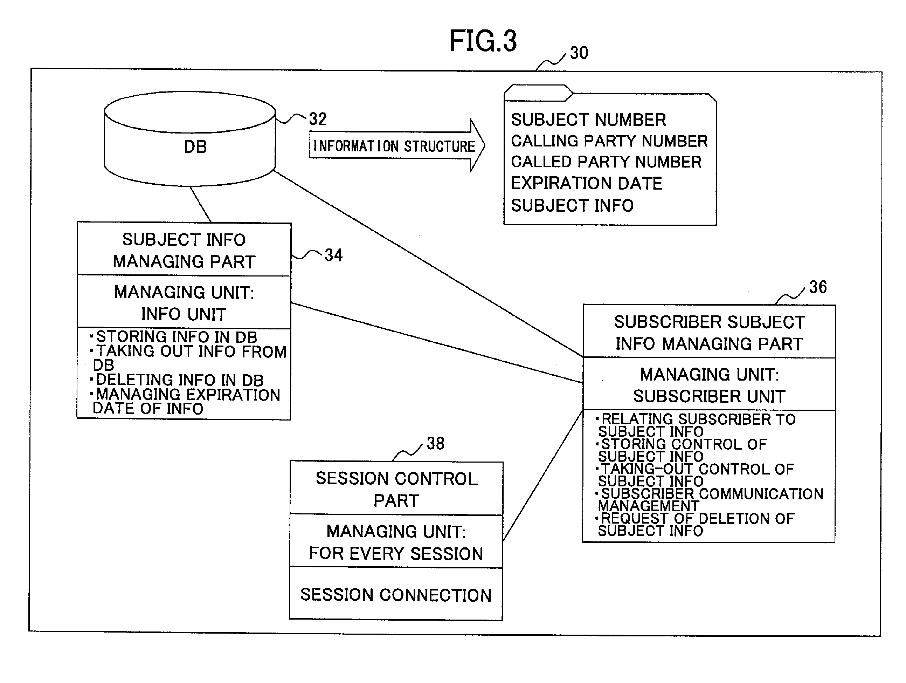

FIG. 3 is a functional structural view of an example of the subject information storage device of the embodiment of the present invention.

As shown in FIG. 3, the subject information storage device 30 includes a database (DB) 32, a subject information managing part 34, a subscriber subject information managing part 36, and a session control part 38. An interface part for communicating with other devices or a control part for controlling other parts is provided in the subject information storage device 30. Functions of the subject information managing part 34, the subscriber subject information managing part 36, and the session control part 38 may be put together in the control part.

The subject information managing part 34 manages subject information stored in the database 32 for every subject. The subject information managing part 34 is started by the subscriber subject information managing part 36 and has storage, taking-out and deleting functions of the subject information. In addition, the subject information managing part 34 also has a function for managing reasons of deletion such as an expiration date (effecting duration) of the information.

The subscriber subject information managing part 36 manages the subject information of the database 32 for every subscriber. The subscriber subject information managing part 36 is started by the session control part 38 and performs storage control and taking-out control of the subject information. In addition, the subscriber subject information managing part 36 also manages communications of the subscribers, and detects opportunities for deletion and taking-out control.

The session control part 38 manages communications between the subject information storage device 30 and a network structure element such as the SIP server 20, the exchanging part 14, or the like forming the network 18.

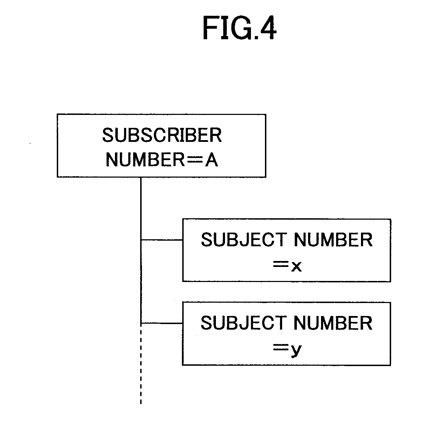

A subject number, a calling party number, a called party number, an expiration date or deletion reasons are added to the subject information and the subject information is stored in the database 32 by the subject information managing part 34. In this case, as shown in FIG. 4, link information of the subject number and the subscriber number where subject information of a different subject number is provided under the same subscriber number (calling party number) is stored in the database 32 by the subscriber subject information managing part 36.

An opportunity when the subject information is to be stored in the subject information storage device 30 can be when calling an opponent to whom the subject information is to be sent or prior to calling. In addition, any of character information, voice information or image information can be stored in the subject information storage device 30. Furthermore, storage in the subject information storage device 30 can be done by e-mail input in the case of the image information, by voice input in the case of the voice information, and by any of voice or character information in the case of the character information. In addition, the expiration date and deletion opportunity of the information stored in the subject information storage device 30 can be set by a caller operating an operations part of a mobile terminal at the time of storage or the like.

### <Operations Sequence of subject information storage device at the time of storing subject information>

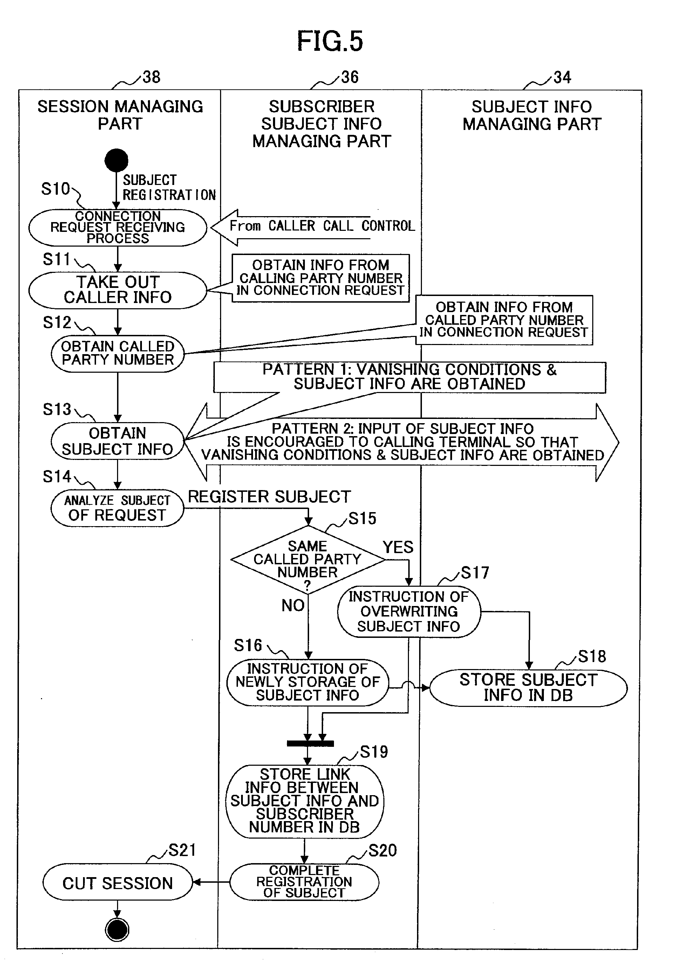

FIG. 5 is a flowchart showing the operations sequence of the subject information storage device at the time when subject information is stored.

As shown in FIG. 5, in step S10, the session managing part 38 implements a receiving process of a calling signal (connection request) by caller call control. Next, the session managing part 38 takes out a calling party number in the connection request in step S11 and takes out a called party number in the connection request in step S12.

Next, in step S13, the subject information is obtained. In this step, if the subject information is included in the connection request such that the subject information is character information (pattern 1), vanishing conditions and the subject information (character information) within the connection request are obtained. If the subject information is not included in the connection request such that the subject information is voice information (pattern 2), the calling terminal is encouraged to input the subject information (voice information) so that vanishing conditions and the subject information are obtained.

In step S14, the session managing part 38 analyzes the subject of request so as to register the subject in the subscriber subject information managing part 36.

The subscriber subject information managing part 36 determines whether the same subscriber number (called party number) as the called party number of the connection request is registered in the database 32. In a case where the same subscriber number (called party number) as the called party number of the connection request is not registered in the database 32, the subscriber subject information managing part 36 sends instructions to the subject information managing part 34 in step S16 so that the subject information of the connection request is registered in the database 32. The subject information managing part 34 actually registers the subject information in the database 32 in step S18.

In a case where the same subscriber number (called party number) as the called party number of the connection request is registered in the database 32, the subscriber subject information managing part 36 sends instructions to the subject information managing part 34 in step S17 so that the subject information of the connection request is overwritten in the database 32. The subject information managing part 34 actually registers the subject information in the database 32 in step S18.

The above-discussed steps S15 and S17 are optional functions for registering only single subject information of the same subscriber number. If this optional function is not provided, plural subject information items are registered for the same subscriber number.

In step S19, the subscriber subject information managing part 36 registers and stores the link information between the subject information and the subscriber number as shown in FIG. 4 in the database 32 so as to complete the subject registration in step S20. Based on this, the session control part 38 cuts the session of the connection request.

### <Operations sequence of subject information storage device at the time of taking out subject information>

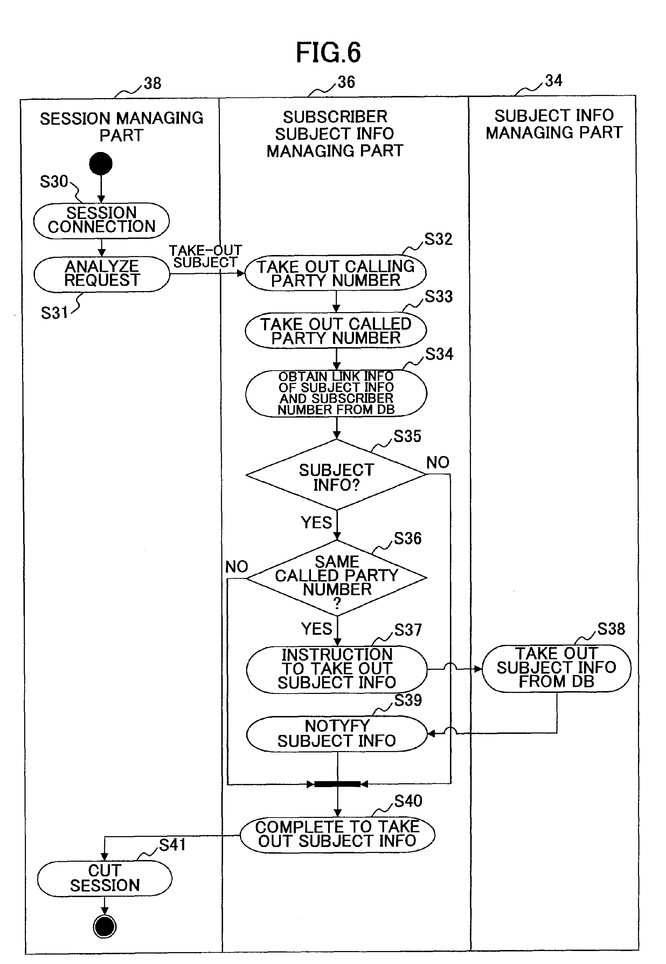

FIG. 6 is a flowchart showing an operations sequence of the subject information storage device at the time when subject information is taken out.

As shown in FIG. 6, in step S30, the session control part 38 connects the session with the exchanging part 14 which makes the call. The session control part 38 analyzes the request and provides a subject taking out request to the subscriber subject information managing part 36.

The subscriber subject information managing part 36 takes out the calling party number within the subject taking-out request in step S32 and the called party number within the subject taking-out request in step S33. The subscriber subject information managing part 36 obtains link information of the subject information and the subscriber number shown in FIG. 4 from the database 32.

Next, in step S35, the subscriber subject information managing part 36 determines if the subject information is registered. In a case where the subject information is registered, the subscriber subject information managing part 36 determines whether the same subscriber number as the called party number within the subject taking-out request is registered in the database 32, in step S36. In a case where the same subscriber number is registered in the database 32, the subscriber subject information managing part 36 sends instruction to the subject information managing part 34 in step S37 so that the subject information is taken out. In step S38, the subject information managing part 34 actually takes out the subject information from the database 32 and sends the subject information to the subscriber subject information managing part 36.

When the subject information is sent to the subscriber subject information managing part 36 in step S39, the subscriber subject information managing part 36 completes taking out the subject information in step 40 so that the session managing part 38 cuts the session. <Operations sequence of the subject information storage device at the time when the subject is deleted by communication completion trigger>

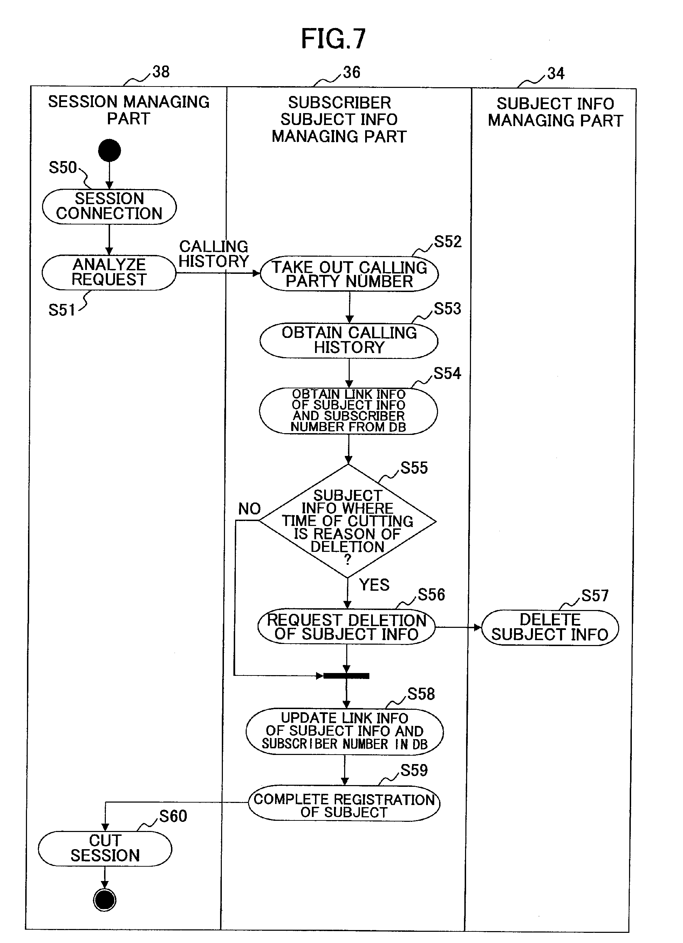

FIG. 7 is a flowchart showing an operations sequence of the subject information storage device at the time when the subject is deleted by a communication completion trigger.

As shown in FIG. 7, in step S50, the session control part 38 connects session with a called side exchanging part or a calling side exchanging part which completes calling. The session control part 38 analyzes request and provides calling history to the subscriber subject information managing part 36.

In a case where the caller terminal responds to calling that designates notification of the subject information so that the calling is made, the called size exchanging part or the calling side exchanging part sends calling history such as the calling party number, the called party number or calling cutting information to the subject information storage device 30.

The subscriber subject information managing part 36 takes out the calling party number in step S52 and obtains the calling history in step S53. The subscriber subject information managing part 36 obtains the link information of the subject information and the subscriber number shown in FIG. 4 from the database 32 in step S54.

Next, the subscriber subject information managing part 36 determines in step S55 whether there is subject information where the time of cutting is the reasons for deletion. In a case where there is subject information satisfying this condition, the subscriber subject information managing part 36 sends the instruction about the deletion of the subject information to the subject information managing part 34 in step S56. The subject information managing part 34 actually deletes the subject information from the database 32 in step S57.

After this, the subscriber subject information managing part 36 updates the link information of the subject information and the subscriber number shown in FIG. 4 in the database 32 in step S58 and completes the deletion of the subject in step S59. As a result of this, the session managing part 38 cuts the session in step S60. <Operations sequence of subject information storage device at the time when a subject is deleted due to expiring of effective time >

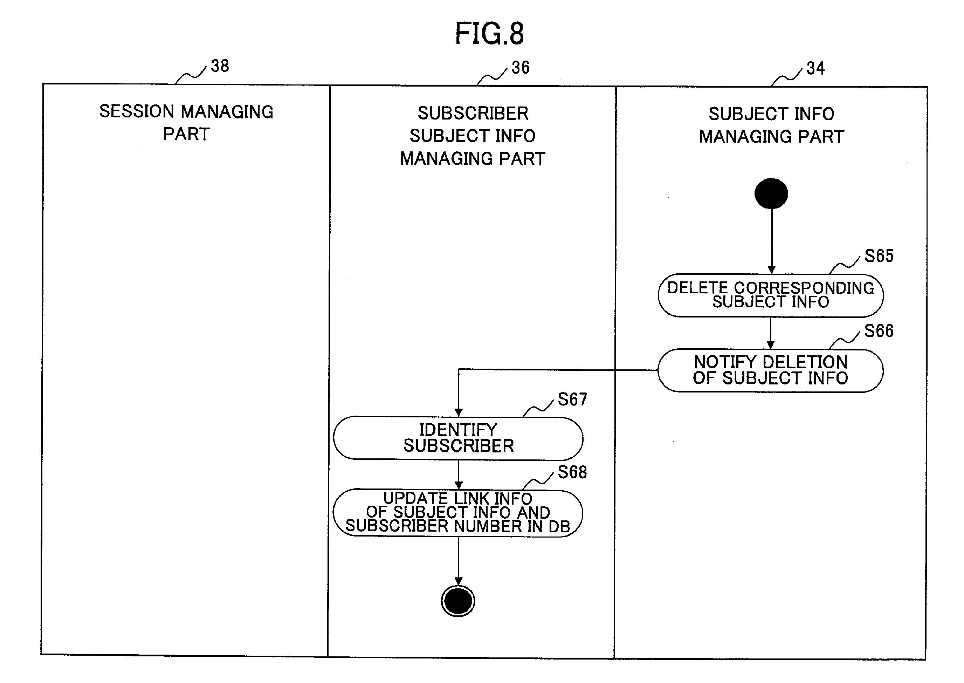

FIG. 8 is a flowchart showing an operations sequence of the subject information storage device at the time when the subject is deleted due to expiring of the effective time.

As shown in FIG. 8, the subject information managing part 34 deletes the subject information whose expiration date is terminated from the database 32 in step S65 and provides the notification of the deletion of the subject information to the subscriber subject information managing part 36 in step S66.

The subscriber subject information managing part 36 identifies the subscriber of the deleted subject information in step S67 and updates the link information of the subject information and the subscriber number shown in FIG. 4 in the database 32.

It is preferable to report the deletion of the subject to the registered calling side terminal.

### <Structure of terminal>

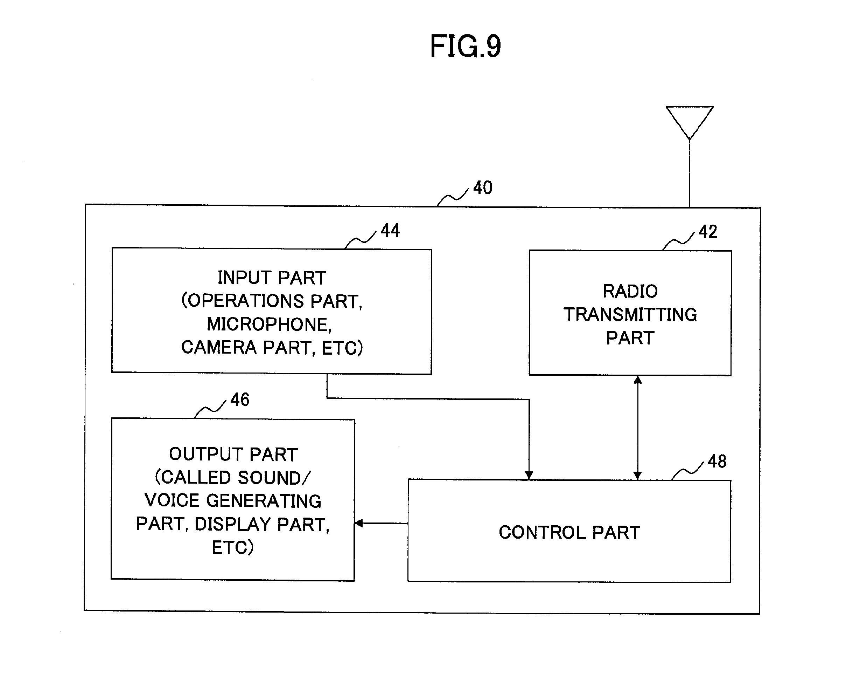

FIG. 9 is a functional structural view of an example of a terminal of the embodiment of the present invention.

As shown in FIG. 9, a terminal 40 includes a radio transmitting part 42, an input part 44, an output part 46, and a control part 48.

The radio transmitting part 42 sends and receives radio signals to and from a radio base station. In addition, the radio transmitting part 42 obtains the subject information from the radio base station at the time of receiving or prior to response after receiving.

The input part 44 has an operations key for character input, a microphone for voice input, a camera for image input, and a function for forming the subject information.

The output part 46 has a speaker for voice output, a display for character or image output, or a camera for image input, and a function for generating the called sound or voice.

The control part 48 controls the entirety of the terminal and registers the subject information formed by the input part 44 and outputs the subject information obtained from the subject information storage device 30 to the output part 46.

Here, the operations of the entire system at the time of the subject information storing time, at the time of subject information obtaining, and at the time of subject information notifying.

### <Operations sequence of an entire system at the time of subject information storing time>

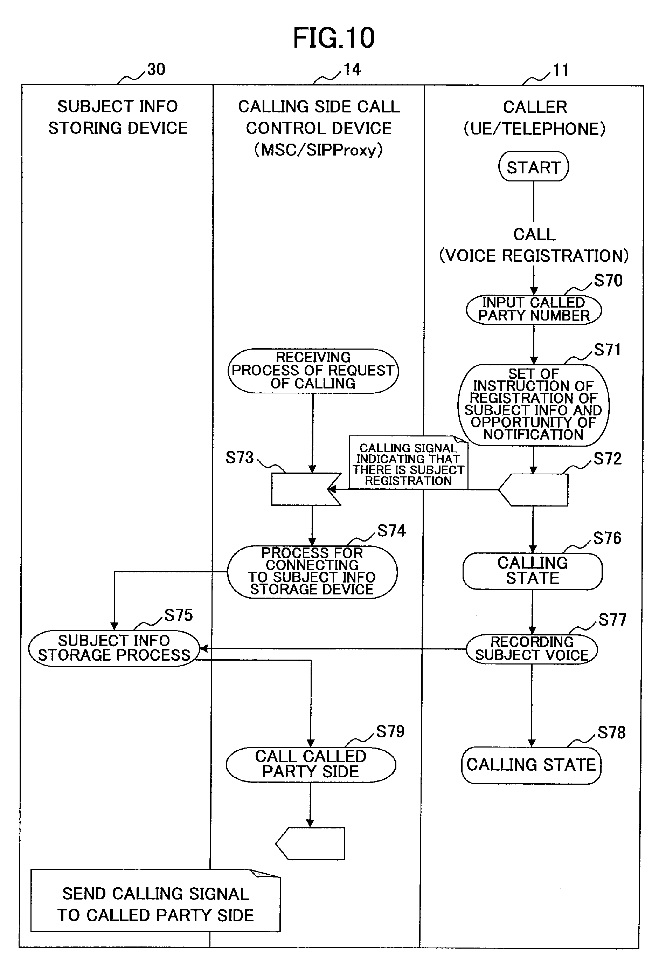

FIG. 10 is a flowchart of an operations sequence of an entire system at the time of the subject information storing time (continuous calling).

Here, an example where, after the subject information is stored, calling to the called terminal side can be continuously made, is discussed.

A caller uses the mobile terminal 11 to input a called party number, namely a telephone number of a terminal of a called party side in step S70 and sets instruction of subject registration and notification opportunity in step S71.

In other words, the instruction of the subject registration is set in the mobile terminal 11 so that the mobile terminal 11 can recognize to report to the network side that this calling is not only mere calling to the terminal of the called side but also calling including a step for registering the subject information.

The mobile terminal 11 where the instruction of the subject registration is set displays plural candidates as opportunities of notification so as to encourage the caller to select the opportunity of the notification and thereby the notification opportunity selected by the caller operating the operations part is registered.

Both of or either of setting of the instruction of the subject registration or setting of the opportunity of the notification may be implemented before the called party number is input.

Next, calling is made by the caller by pushing a calling starting button. Since the setting of the instruction of the subject registration is done, a calling signal indicating that there is subject registration is sent in step S72. In step S73, the calling signal indicating that there is subject registration is received by the exchanging part 14 (or the SIP server 20) as a calling side call control device.

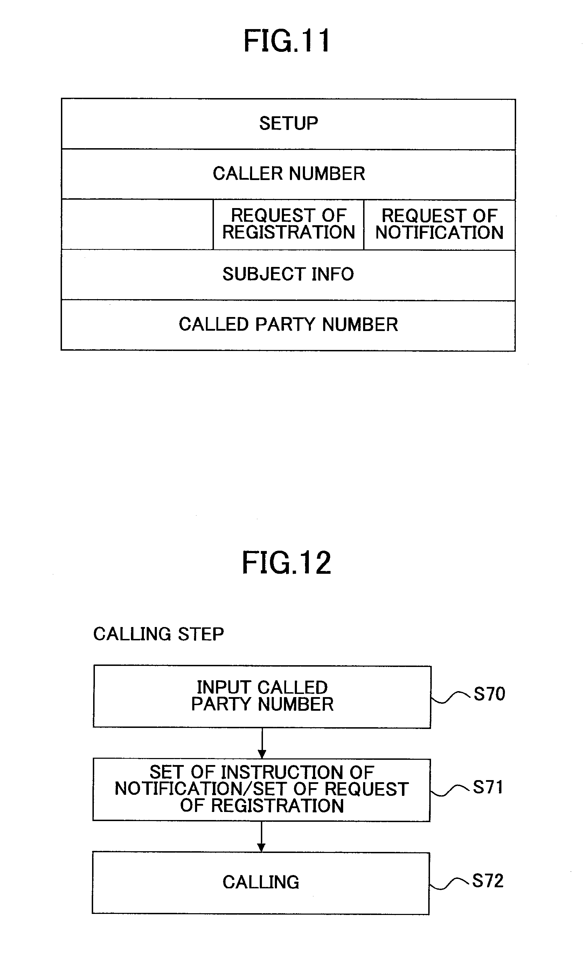

The process steps of calling at the mobile terminal 11 are shown in FIG. 12.

A format of an example of a calling signal of the present invention is shown in FIG. 11. The calling signal includes a normal SETUP command, a caller number field storing a caller number that is a number of a calling side terminal, a registration request field instructing existence of the registration request following a called party number field storing a called party number that is a number of a called side terminal, a notification request field instructing notification together with the existence of the notification request or notification after a certain time passes, and a subject information field storing the subject information. In a case where the registration request exists, each item of the information format such as image, voice or character, deletion opportunity of one time or after calling is finished, or an existence period is set in the registration request field.

Since the existence of the subject registration is set in the registration request field of the received calling signal, the exchanging part (or the SIP server 20) implements a process for connecting to the subject information storage device 30 in step S74. As a result of this, the subject information storage device 30 implements the subject information storage process in step S75.

This subject information storage process is discussed above. Here, the subject information is assumed to be voice information (pattern 2).

Therefore, the subject information storage device 30 encourages the calling terminal to input the subject information (voice information) and the deletion condition so as to obtain the subject information and the deletion condition.

In other words, the mobile terminal 11 is in a calling state where notification that a process for connecting to the subject information connection device 30 is being is made, in step S76. The subject information storage device 30 responds and announces "please input the subject" to the caller. Hence, the caller records the subject to the subject information storage device 30 in step S77.

The subject information storage device 30 explains by communicating several candidates as deletion condition of the subject information to the number by announcement and the caller operates the mobile terminal 11 and registers the deletion condition corresponding to the number being input.

After the registration is finished, the calling side call control device (exchanging part 14) sends the calling signal to the exchanging part (or the SIP server 20) which is a called side control device so as to implement a process for being called to the called party side terminal in step S79 and makes the calling party side terminal be in a state to call the called party side terminal in step S78.

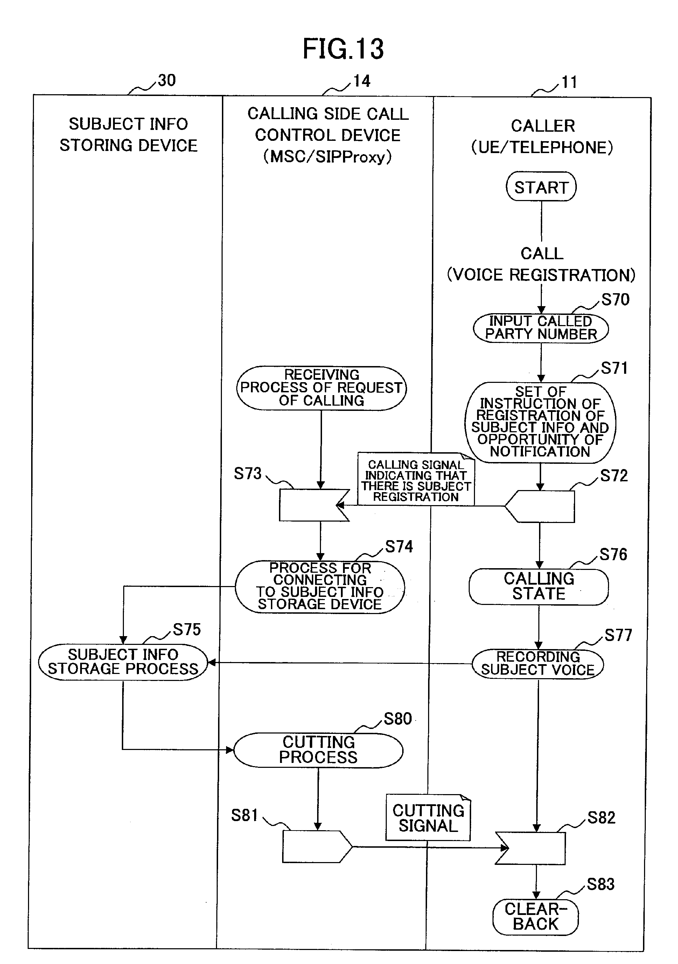

FIG. 13 is a second flowchart of the operations sequence of the entire system at the time of the subject information storing (only registration).

In this example, after the subject information is stored, the called party side terminal is not continuously called but calling by the calling terminal is cut due to completion of registration.

In FIG. 13, steps that are the same as the steps shown in FIG. 10 are given the same reference numerals.

A caller uses the mobile terminal 11 to input a called party number, namely a telephone number of a terminal of a called party side in step S70 and sets instruction of subject registration and notification opportunity in step S71.

Next, calling is started by the caller pushing a calling starting button. Since the setting of the instruction of the subject registration is done, a calling signal indicating that there is subject registration is sent in step S72. In step S73, the calling signal indicating that there is subject registration is received by the exchanging part 14 (or the SIP server 20) as a calling side call control device. In the calling signal, existence of the subject registration is set in the registration request field and non-existence of subject notification is set in the notification request field.

Since the existence of the subject registration is set in the registration request field of the received calling signal, the exchanging part (or the SIP server 20) implements a process for connecting to the subject information storage device 30 in step S74. As a result of this, the subject information storage device 30 implements the subject information storage process in step S75.

This subject information storage process is discussed above. Here, the subject information is assumed to be voice information (pattern 2).

Therefore, the subject information storage device 30 encourages the calling terminal to input the subject information (voice information) and the deletion condition so as to obtain the subject information and the deletion condition.

In other words, the mobile terminal 11 is in a calling state where notification that a process for connecting to the subject information connection device 30 is being is made, in step S76. The subject information storage device 30 responds and announces "please input the subject" to the caller. Hence, the caller records the subject in the subject information storage device 30 in step S77.

The exchanging part 14 which receives the recording completion notification from the subject information storage device 30 implements a cutting process in step S80 and transmits a cutting signal to the mobile terminal 11 in step S81. When the mobile terminal 11 receives the cutting signal in step S82, a clear back process is done in step S83.

### <Operations sequence of an entire system at the time of subject information obtaining (immediate notification)>

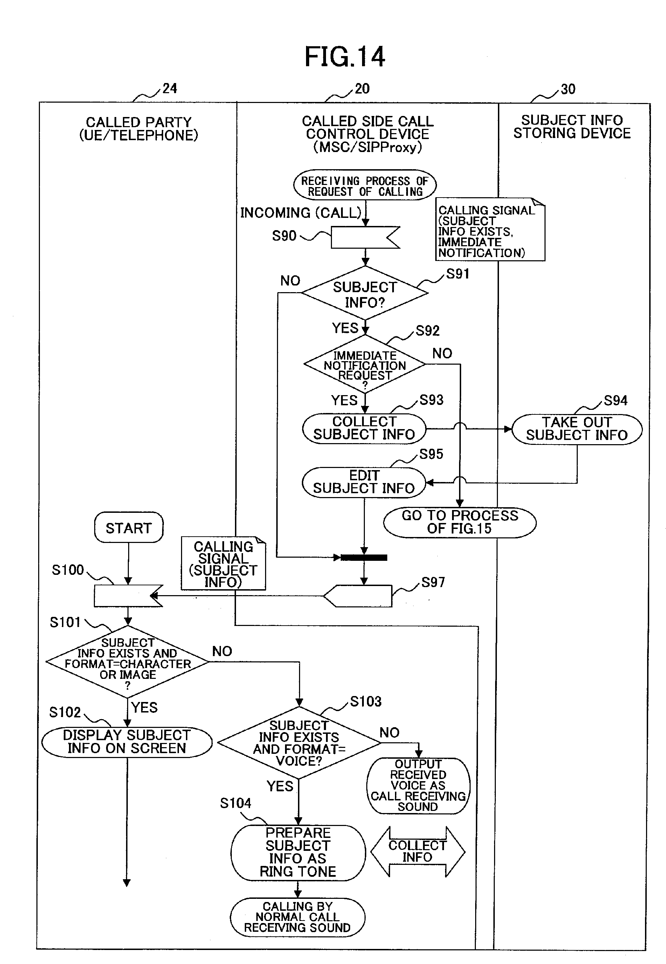

FIG. 14 is a flowchart of an operations sequence of an entire system at the time of subject information obtaining (immediate notification).

This corresponds to, for example, a process after the exchanging station (or the SIP server 20) as the called side call control device which receives a calling signal in step S79 in FIG. 10.

In step S90, the exchanging station (or the SIP server 20) as the called side call control device receives a calling signal where existence of the subject registration is set in the registration request field and immediate notification or notification after a certain time passes is set in the notification request field.

In step S91 and S92, the exchanging station (or the SIP server 20) distinguishes the registration request field and the notification request field of the calling signal. In a case of existence of the subject registration and the immediate notification, in step S93, instructions for collection of the subject information are sent to the subject information storing device 30. As a result of this, the subject information is taken out in step S94 by the subject information storing device 30 and the process goes to step S97. A process for taking out the subject information is as shown in FIG. 6.

In a case of non-existence of the subject registration, a normal call receiving process is done and calling is made by a call receiving sound registered at the called side terminal.

After this, the subject information transmitted from the subject information storing device 30 is received by the exchanging station (or the SIP server 20) in step S95.

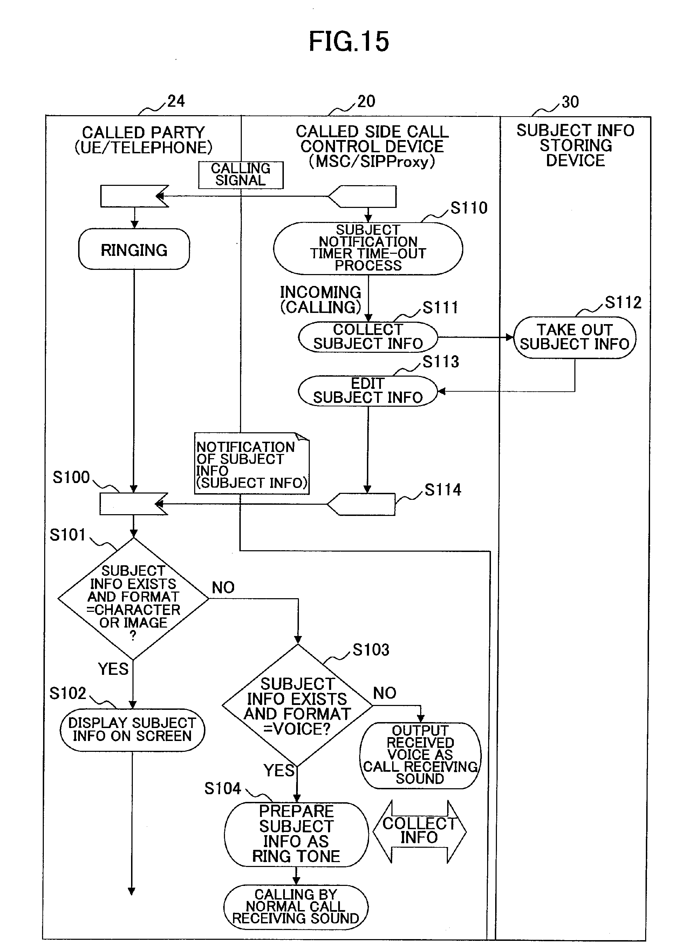

In a case where it is determined in step S92 that the request is not the immediate notification request, that is in a case of the notification after a certain time passes, the process goes to that discussed with reference to FIG. 15.

The above-mentioned calling signal is received by the called party side terminal (IP telephone 24) in step S100 and the contents of the calling signal are confirmed. Whether the existence of the subject information is set and whether the information format is character or image (whether information that can be output as the subject is included) are determined. In a case where there is subject information and the information format is character or image, the subject information included in the calling signal is displayed on the IP telephone 24 in step S102.

As long as there is no specific operation, the displaying is continuous or it is preferable that displaying for a certain time and non-displaying for a certain time are repeated like a call receiving sound. This is because it is similar to conventional call receiving control.

On the other hand, if there is subject information and the information format is not character or image, whether the subject information exists and the information format is voice is determined in step S103.

In a case where the subject information exists and the information format is voice, that is, in a case where information that can be output as the subject is not included, the called party waits for the voice information being sent from the called side call control device in step S104. When the voice information is received, the voice registered as the subject information by the calling party is output at the called party side terminal.

In a case where the subject information can be included in the calling signal, the called side call control device transmits the calling signal including the subject information. In a case where the subject information cannot be included in the calling signal, the called side call control device transmits the calling signal not including the subject information itself and then transmits the subject information as a control channel or the like.

If "NO is determined at step S103, the called side terminal makes sounds of a normal call receiving sound. Even if calling is made by character, image, voice, or the normal call receiving sound, as long as the response operation is made at the called side terminal, a communication path between the calling side terminal and the called side terminal is made so that a communications state is formed.

### <Operations sequence of an entire system at the time of subject information obtaining (notification after a certain time passes)>

FIG. 15 is a flowchart of an operations sequence of an entire system at the time of subject information obtaining (notification after a certain time passes). In FIG. 15, steps that are the same as the steps shown in FIG. 14 are given the same reference numerals.

After the called side call control device (exchanging station, SIP server, or the like) recognizes the notification after a certain time in step S92 of FIG. 14, the calling signal not including the subject information is transmitted to the called side terminal.

At the called side terminal, a normal ringing process is performed by a call receiving sound registered at the terminal.

On the other hand, the exchanging station (or the IP server 20) recognizes the notification after a certain time and starts a time-out process after step S110 by time-out of a started subject notification timer. The called side terminal is in a state where the call receiving sound already rings.

Next, in step S111, collection of the subject information is instructed to be performed by the subject information storing device 30 in step S111. As a result of this, the subject information is taken out in step S112 by the subject information storing device 30 in step S112. Taking out the subject information is as shown in FIG. 6.

After this, the exchanging station (or the SIP server 20) collects the subject information transmitted from the subject information storing device 30 in step S113. After this, the notification of the subject information obtained in step S114 is transmitted to the IP telephone 24 of the called party.

The above-mentioned notification of the subject information is received by the called party side terminal (IP telephone 24) in step S100. Whether the existence of the subject information is set and whether the information format is character or image are determined. In a case where there is subject information and the information format is character or image, the subject information in addition to ringing of the call receiving sound is displayed on the IP telephone 24 in step S102.

Ringing of the call receiving sound may be stopped and the subject information may be displayed. An embodiment of the display of the subject information is as discussed above.

### <Operations sequence of an entire system at the redialing time>

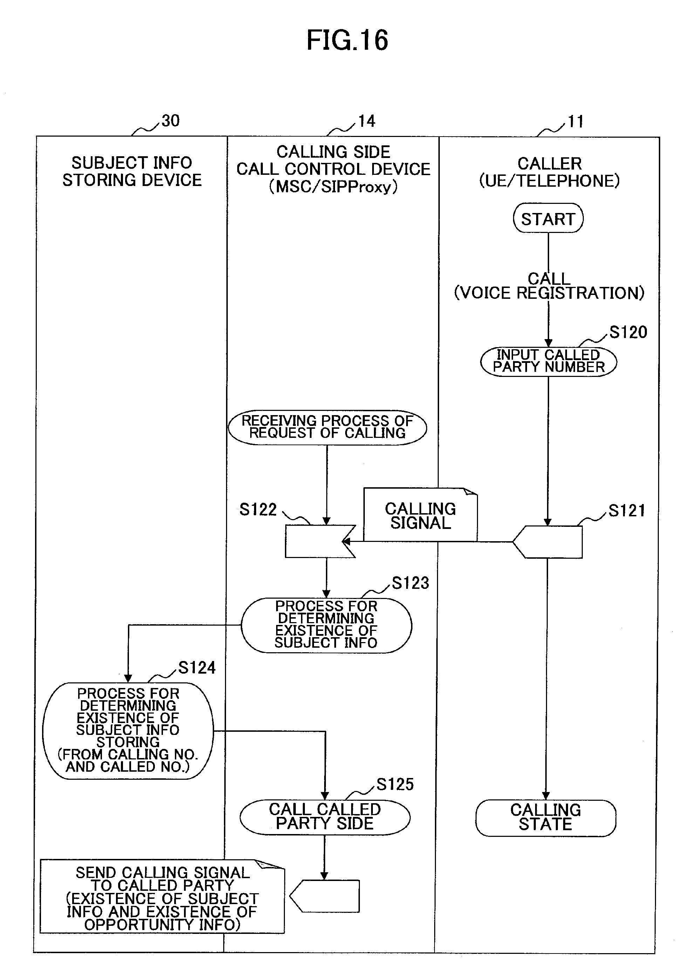

FIG. 16 is a flowchart of an operations sequence of an entire system at the redialing time. In FIG. 16, steps that are the same as the steps shown in FIG. 10 are given the same reference numerals.

A caller inputs a called number by the mobile terminal 11, for example, in step S120. A calling signal indicating existence of the instruction of the notification request (non-existence of the subject registration) is transmitted by sending step S121. In step S122, the calling signal indicating the existence of the notification request is received by the exchanging station 14 (or the SIP server 20) connected to the subject information storing device 30 via the network 18.

The existence of the notification request can be automatically set by redialing in a case of existence of the notification request in a previous calling or may be set by the operations of the caller.

Although the subject information is not registered, since the notification request is set, the exchanging station 14 implements a subject information existence determining process in step S123 for determining whether the subject information corresponding to the called number and the caller number corresponding to the calling signal is registered in the subject information storing device 30. As a result of this, the subject information storing device 30 determines, in step S124, the existence of the subject information corresponding to the called number and the caller number corresponding to the calling signal.

When the subject information storing device 30 determines that the subject information is stored, the exchanging station sends the result of determination and transmits the calling signal to an exchanging station at the called side call control part of the network or the SIP server 20 in step S125.

The processes after this are the same as the process shown in FIG. 14 and FIG. 15.

### <Second embodiment>

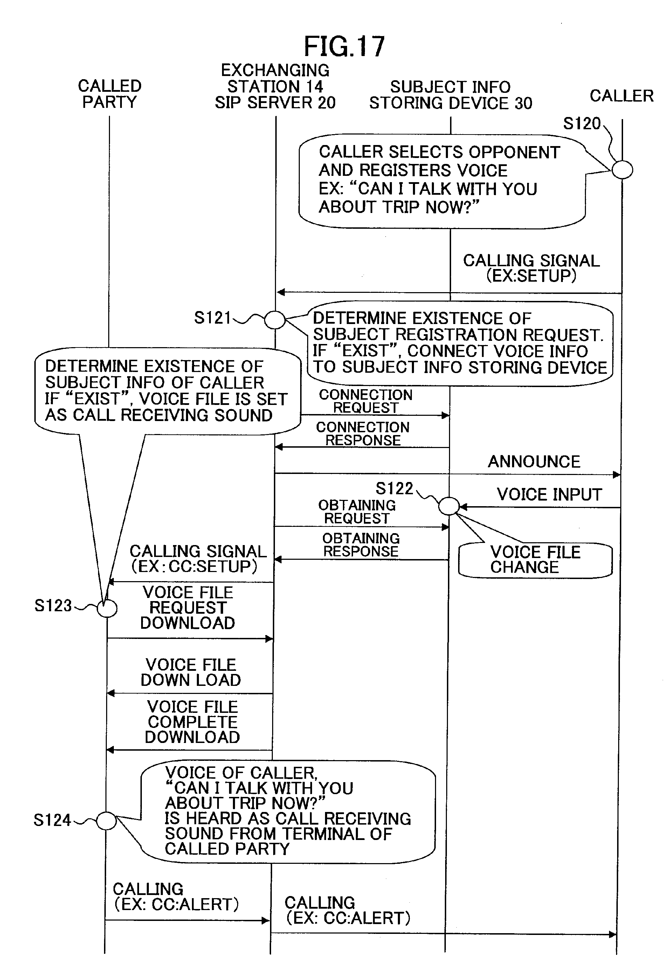

FIG. 17 is a flowchart of a sequence of an example where the subject information is registered by voice or sound at the time of calling and the subject information is indicated by a ringing sound.

Instead of the ringing sound (calling sound) registered at the called side terminal, the subject information may be output. Furthermore, a part of the ringing sound may be replaced with the subject information for being output. For example, calling is made by the ringing sound first and then a sound formed by regenerating the voice file after a voice file is downloaded, instead of the ringing sound.

The caller sets "existence of the registration of the subject information" and "the immediate notification" and calls to the called party in step S120.

Because of the existence of the registration of the subject information, the exchanging station 14 of the calling call control received calling request connects to the subject information storing device 30 in step S121.

The exchanging station 14 make an announcement for encouraging the calling party to perform voice registering in the subject information storing device 30 so that the calling party records the subject in the subject information storing device 30 in step S122.

The exchanging station 14 receiving the record completion notification transmits the calling signal to the exchanging station at the called side call control part of the network or the SIP server 20 (called side call control).

The exchanging station (or the SIP server 20) obtains the subject information from the subject information storing device 30 because the received calling signal indicates the existence of the subject information and the immediate notification.

The exchanging station (or the SIP server 20) obtaining the subject information transmits the calling signal to the called terminal.

The called terminal receiving the calling signal determines whether there is the subject information. In a case where there is the subject information, the called terminal determines an information format in step S123.

Since the subject information is voice, the called terminal obtains the voice file from the exchanging station (or the SIP server 20) (for example, communicates via a control channel) so that the voice is pronounced in step S124.

The voice file can be automatically transmitted from the exchanging station side via the control channel or the like. In addition, the voice of the subject information can be repeatedly pronounced many times during the ringing.

In a case where the called side terminal responds, it is preferable to form a communication path so that the communication can be made.

### <Third embodiment>

A third embodiment where the subject information is registered by character at the time of calling and the subject information is displayed on the screen of the called terminal is discussed.

The caller sets the existence of registration of the subject information and the immediate notification after forming the subject information by character, then the caller performs transmitting including the formed subject information to the called party.

Because of the existence of the registration of the subject information, the exchanging station 14 of the calling call control receiving the call request connects to the subject information storing device 30.

The exchanging station 14 registers the subject information received from the caller in the subject information storing device 30.

The exchanging station 14 receiving the registration completion notification transmits the calling signal to the exchanging station at the called side call control part of the network or the SIP server 20 (called side call control).

The exchanging station (or the SIP server 20) obtains the subject information from the subject information storing device 30 because the received calling signal indicates the existence of the subject information and the immediate notification.

The exchanging station (or the SIP server 20) obtaining the subject information transmits the calling signal including the subject information to the called terminal.

The called terminal receiving the calling signal determines whether there is the subject information. If there is subject information, the information format is determined.

Since the subject information is character, while the called terminal displays the character information file on the screen, the called terminal pronounces a normal call receiving sound.

The subject information may not be included in the calling signal and the called terminal may access the called side exchanging station or the subject information storing device so as to obtain the subject information. In addition, the subject information may be automatically transmitted from the called side exchanging station side.

### <Fourth embodiment>

A fourth embodiment where the subject information is registered by an image at the time of calling and the subject information is displayed on the screen of the called terminal is discussed.

The caller sets the existence of registration of the subject information and the immediate notification after setting the image subject information; then the caller performs transmitting including the image subject information to the called party.

Because of the existence of the registration of the subject information, the exchanging station 14 of the calling call control receiving the call request connects to the subject information storing device 30.

The exchanging station 14 registers the subject information received from the caller in the subject information storing device 30.

The exchanging station 14 receiving the registration completion notification transmits the calling signal to the exchanging station at the called side call control part of the network or the SIP server 20 (called side call control).

The exchanging station (or the SIP server 20) obtains the subject information from the subject information storing device 30 because the received calling signal indicates the existence of the subject information and the immediate notification.

The exchanging station (or the SIP server 20) obtaining the subject information transmits the calling signal including the subject information to the called terminal.

The called terminal receiving the calling signal determines whether there is the subject information. If there is subject information, the information format is determined.

Since the subject information is the image, while the called terminal displays the image file on the screen, the called terminal pronounces a normal call receiving sound.

The image may be included in the calling signal and the image may be automatically transmitted from the exchanging station (or the SIP server 20) to the called terminal after the calling signal is transmitted.

### <Fifth embodiment>

A fifth embodiment where the subject information is registered by voice at the time of calling and the subject information is indicated by the ringing sound after a certain time passes is discussed.

The caller sets the existence of registration of the subject information and the notification after a certain time passes and performs transmitting including the image subject information to the called party.

Because of the existence of the registration of the subject information, the exchanging station 14 of the calling call control receiving the call request connects to the subject information storing device 30.

The exchanging station 14 encourages the caller to record the voice in the subject information storing device 30, so that the caller records the subject in the subject information storing device 30.

The exchanging station 14 receiving the record completion notification transmits the calling signal to the exchanging station at the called side call control part of the network or the SIP server 20 (called side call control).

The exchanging station (or the SIP server 20) starts the subject notification timer and transmits the calling signal to the called terminal because the received calling signal indicates the existence of the subject information and the notification after a certain time passes.

After time out of the subject notification timer, the exchanging station (or the SIP server 20) collects the subject information and transmits the calling signal to the called terminal.

The called terminal receiving the calling signal determines whether there is the subject information. In a case where there is the subject information, the called terminal determines an information format.

Since the subject information is voice, the called terminal obtains the voice file from the exchanging station (or the SIP server 20) (for example, communicates via a control channel) so that the voice is pronounced in step S124.

The voice file can be automatically transmitted from the exchanging station side via the control channel or the like. In addition, the voice of the subject information can be repeatedly pronounced many times during the ringing.

### <Sixth embodiment>

A sixth embodiment where the subject information is registered by character at the time of calling and the subject information is displayed on the screen of the called terminal after a certain time passes is discussed.

The caller sets the existence of registration of the subject information and the notification after a certain time passes and transmits the calling signal including the image subject information to the called party.

Because of the existence of the registration of the subject information, the exchanging station 14 of the calling call control receiving the call request connects to the subject information storing device 30.

The exchanging station 14 records the subject information received from the caller in the subject information storing device 30.

The exchanging station 14 receiving the record completion notification transmits the calling signal to the exchanging station or the SIP server 20 (called side call control).

The exchanging station (or the SIP server 20) starts the subject notification timer and transmits the calling signal (including the subject information) to the called terminal because the received calling signal indicates the existence of the subject information and the notification after a certain time passes.

After time out of the subject notification timer, the exchanging station (or the SIP server 20) collects the subject information from the subject information storing device 30 and transmits the calling signal to the called terminal.

The called terminal receiving the calling signal determines whether there is the subject information. In a case where there is the subject information, the called terminal determines an information format.

Since the subject information is character, a normal call receiving sound is made while the character information file is displayed on the screen.

The subject information may not be included in the calling signal and may be obtained by accessing the called side exchanging station or the subject information storing device. The subject information can be automatically transmitted from the exchanging station side.

### <Seventh embodiment>

A seventh embodiment where the subject information is registered by image information at the time of calling and the subject information is displayed on the screen of the called terminal after a certain time passes is discussed.

The caller sets the existence of registration of the subject information and the notification after editing and transmits the calling signal including the image subject information to the called party.

Because of the existence of the registration of the subject information, the exchanging station 14 of the calling call control receiving the call request connects to the subject information storing device 30.

The exchanging station 14 records the subject information received from the caller in the subject information storing device 30.

The exchanging station 14 receiving the record completion notification transmits the calling signal to the exchanging station or the SIP server 20 of the network (called side call control).

The exchanging station (or the SIP server 20) starts the subject notification timer and transmits the calling signal (including the subject information) to the called terminal because the received calling signal indicates the existence of the subject information and the notification after a certain time passes.

After time out of the subject notification timer, the exchanging station (or the SIP server 20) obtains the subject information from the subject information storing device 30 and transmits the calling signal including the image subject information to the called terminal.

The called terminal receiving the calling signal determines whether there is the subject information. In a case where there is the subject information, the called terminal determines an information format.

Since the subject information is image, a normal call receiving sound is made while the image file is displayed on the screen.

The image may be included in the calling signal. The image can be automatically transmitted from the exchanging station (or the SIP server 20) to the called terminal.

### <Eighth embodiment>

An eighth embodiment where the subject information is registered by voice in advance is discussed.

The caller sets the existence of registration of the subject information and the notification opportunity (the immediate notification/the notification after a certain time passes) and transmits to the exchanging station 14 of the calling call control.

Because of the existence of the registration of the subject information, the exchanging station 14 of the calling call control receiving the call request connects to the subject information storing device 30.

The exchanging station 14 encourages the caller to record the voice in the subject information storing device 30, so that the caller records the subject in the subject information storing device 30.

The exchanging station 14 receiving the record completion notification transmits the cutting signal to the caller.

### <Ninth embodiment>

A ninth embodiment where the subject information is registered by character in advance is discussed.

After forming the subject information by the character, the caller sets the existence of registration of the subject information and the notification opportunity (the immediate notification/the notification after a certain time passes) and transmits to the exchanging station 14.

Because of the existence of the registration of the subject information, the exchanging station 14 receiving the call request connects to the subject information storing device 30.

The exchanging station 14 registers the subject information received from the caller in the subject information storing device 30.

The exchanging station 14 receiving the record completion notification transmits the cutting signal to the caller.

### <Tenth embodiment>

A tenth embodiment where the subject information is registered by an image in advance is discussed.

After registering the subject information by the image, the caller sets the existence of registration of the subject information and the notification opportunity (the immediate notification/the notification after a certain time passes) and transmits to the exchanging station 14.

Because of the existence of the registration of the subject information, the exchanging station 14 receiving the call request connects to the subject information storing device 30.

The exchanging station 14 registers the subject information received from the caller in the subject information storing device 30.

The exchanging station 14 receiving the record completion notification transmits the cutting signal to the caller.

### <Eleventh embodiment>

An eleventh embodiment, where redialing is made if there is no response from the called party, is discussed. The operations sequence of the entire system is shown in FIG. 16.

The caller redials the called party.

The exchanging station 14 receiving the call request determines whether the subject information already registered is in the subject information storing device 30, from the calling party number and the called number.

After setting the existence of registration of the subject information and the notification opportunity (the immediate notification/the notification after a certain time passes), the exchanging station 14 receiving the notification of the existence of the subject information transmits the calling signal to the exchanging station (or the SIP server 20) of the called side call control of the network.

### <Twelfth embodiment>

A twelfth embodiment, where the subject information is deleted based on the completion of the subject, is discussed.

After the communication is ended (subject is completed), the subject information storing device 30 are notified by the exchanging station 14 of the calling call control.

The subject information storing device 30 finds out the subject information by the calling party number and the called party number. In a case where the deletion opportunity is end of the communication, the subject information is deleted. The operations sequence in the subject information storing device 30 is shown in FIG. 8.

### <Thirteenth embodiment>

A thirteenth embodiment, where the subject information items is deleted based on the expiration of the termination, is discussed.

The termination of each of the subject information is detected by the subject information storing device 30.

After deleting the subject information whose termination is expired, the subject information storing device 30 deletes the link information with the subscriber number (called party number) as shown in FIG. 4.

Thus, even if the called party does not receive the phone call, the called party can know the subject of the calling party. Therefore, it is possible for the called party to obtain the conditions for determining whether a response should be made. In a case where the called party is a company, after the phone call is received at the representative number, the subject information is automatically determined, a corresponding department is selected based on the result of determination, and the subject information is transferred to the department.

The subject information managing part 34 corresponds to a subject information managing part in claims below; the subscriber information managing part 36 corresponds to a subscriber information managing part in claims below; and the session control part 38 corresponds to a session control part in claims below.

The present invention is not limited to these embodiments, but variations and modifications may be made without departing from the scope of the present invention.

## Claims

1. A subject indicating method, comprising the steps of:
registering subject information in a subject information storing device connected to a network, the subject information being input from a calling terminal at the time of calling;
notifying a called terminal of the subject information read from the subject information storing device at the time of call receiving by the called terminal; and
indicating the subject information to the called terminal at the time of call receiving by the called terminal.

2. The subject indicating method as claimed in claim 1,
wherein the subject information is voice.

3. The subject indicating method as claimed in claim 1,
wherein the subject information is a character.

4. The subject indicating method as claimed in claim 1,
wherein the subject information is an image.

5. The subject indicating method as claimed in claim 2,
wherein the voice of the subject information is called at the time of call receiving by the called terminal and the voice is pronounced instead of a sound.

6. The subject indicating method as claimed in claim 2,
wherein an immediate time or a time after a certain time passes is set, as a time for notifying the called terminal of the subject information after the subject information is registered in a subject information storing device, at the time when the subject information is registered in the subject information storing device.

7. The subject indicating method as claimed in claim 1,
wherein, in a case where there is no response to calling the called terminal and redialing is performed by the calling terminal, the called terminal is notified of the subject information that is read from the subject information storing device again, and the subject information is indicated at the time of call receiving of the called terminal.

8. The subject indicating method as claimed in claim 1,
wherein the time when communication between the calling terminal and the called terminal is ended or a time when a certain amount of time passes after registration is set as timing for deleting the subject information registered in the subject information storing device, at the time of registering the subject information in the subject information storing device.

9. A subject information storing device connected to a network, comprising:
a data base configured to store subject information being input from a calling terminal;
a subject information managing part configured to manage the subject information stored in the database for every subject;
a subscriber subject information managing part configured to manage the subject information stored in the database for every subscriber; and
a session control part configured to manage communication with a network structural element.

10. A terminal, comprising:
a radio transceiver part configured to obtain subject information being input from an input part of a calling terminal via a radio base station at the time of or after receiving and before response; and
a control part configured to output the subject information from an output part after receiving and within a certain time after the response.

11. A terminal, comprising:
a registration part configured to register subject information in a called terminal when connecting to a subject information storing device at the time of calling or after calling, the subject information being output from an output part of the called terminal at the time of call receiving or after a certain time passes after the call receiving.
